# EUROPEAN PATENT SPECIFICATION

(11) **EP 1 445 923 B1**
(45) Date of publication and mention of the grant of the patent: **12.08.2015**
(21) Application number: 04002319.4
(22) Date of filing: 03.02.2004
(51) Int. Cl.: H04M 1/725

(54) **Operation limiting technique for a camera-equipped mobile communication terminal**
Methode zum Abgrenzen der Funktion von einen Handy mit einem eingebauten Fotoapparat
Méthode pour limiter des fonctions photographiques d'un téléphone cellulaire comprenant un appareil photographique

(30) Priority: 04.02.2003 JP 2003027586; 02.12.2003 JP 2003403515
(43) Date of publication of application: 11.08.2004
(60) Divisional application: 09002946.3
(73) Proprietor: Lenovo Innovations Limited (Hong Kong), Quarry Bay, Hong Kong (HK)
(72) Inventor: Hayashi, Hideyuki, c/o NEC Corporation, Tokyo (JP)
(74) Representative: Samson & Partner Patentanwälte mbB

(56) References cited:
- US-A1- 2001 044 321
- US-A1- 2002 028 674
- US-A1- 2002 055 372
- US-A1- 2002 065 070

## Description

The present invention relates to a mobile communication terminal equipped with a camera such as a digital still camera or a digital video camera and in particular to an operation limiting system and method for putting operation-limitations on the camera-equipped mobile communication terminal.

With the widespread use of mobile telephone terminals equipped with digital still/video camera, there have arisen various camera-related problems, for example, an invasion of privacy and photo/video shooting in an area where cameras are prohibited from use. Accordingly, there have been proposed various techniques of solving such problems.

Japanese Patent Application Unexamined Publication No. 11-261674 discloses a camera-equipped portable telephone terminal which can be set to an inhibition mode of shooting with a flash or making a beep depending on whether the terminal is located near a control station or within a radio zone formed by the control station.

Japanese Patent Application Unexamined Publication No. P2000-152217A discloses a mobile video telephone terminal, which can be surely inhibited from capturing, storing or transmitting any image in the vicinity of a shooting-inhibition signal transmitter.

Contrarily, there are cases where video telephone function is needed, for example, in emergency. Japanese Patent Application Unexamined Publication No. P2002-252683A discloses a mobile telephone terminal having a video telephone function, which can be automatically set to a video telephone mode when an emergency communication request is detected.

However, the conventional techniques uniformly put function limitations on mobile telephones located in the place. Accordingly, there are cases where the photo/video shooting and telecommunication functions of a camera-equipped mobile telephone terminal are remarkably impaired. In addition, it is true that the video telephone function or the like is needed in emergency.

US Patent Application Publication No. 2002/0028674 A1 relates to a communication system which includes a politeness zone which is intended to limit the disruptive effects and usage of communication devices. A wireless communication device is configured to receive incoming communications over a first communication channel and politeness requests over a second communication channel. The communication device comprises an alerting mechanism configured to indicate receipt of an incoming communication over the first communication channel. The alerting mechanism is operable in a politeness mode and a non-politeness mode. The politeness requests indicate that operation of the alerting mechanism should be set to politeness mode. A politeness zone transmitter is configured to send politeness requests to the communication device over the second communication channel when the communication device is proximate the politeness zone. The politeness zone transmitter may include a separate storage medium for storing the communication and radio control software required for communicating over the short-range communication channel. The communication device may include a politeness control profile that controls how device responds to politeness requests.

An object of the present invention is to provide a camera-equipped mobile communication terminal and its operation limiting system and method, which allow appropriate function limitations on camera-equipped mobile communication terminals and necessary function permissions depending on situations or occasions.

The present invention is directed at a system and a method for limiting a plurality of camera functions in a mobile communication terminal equipped with a camera, and at a corresponding mobile communication terminal as defined in the claims.

According to some aspects of the present invention, a system for limiting a plurality of camera functions in a mobile communication terminal equipped with a camera may include: at least one operation-limited area, wherein the mobile communication terminal is allowed to determine whether the mobile communication terminal is located within an operation-limited area; a memory storing camera-function limitation data for each of the at least one operation-limited area, the camera-function limitation data indicating selective inhibition of the plurality of camera functions; and a camera function controller for selectively inhibiting the plurality of camera functions depending on camera-function limitation data corresponding to an operation-limited area in which the mobile communication terminal is located.

The camera function controller preferably releases an inhibited camera function when a predetermined condition is satisfied.

According to an aspect of the present invention, each of the at least one operation-limited area is substantially defined by radio propagation of a camera-function limiting signal broadcast by a radio station, the camera-function limiting signal including the camera-function limitation data, wherein the mobile communication terminal comprises a radio receiver for receiving the camera-function limiting signal from the radio station.

The system may further include: an emergency communication detector for detecting occurrence of an emergency communication to inform the camera function controller of the occurrence of the emergency communication, wherein, when informed of the occurrence of the emergency communication in a case of inhibition of a predetermined camera function, the camera function controller releases the inhibition of the predetermined camera function.

The predetermined camera function is preferably a video telephone function.

The system may further include: a face image memory for previously registering a face image of each authorized user, wherein, when an input image picked up by the camera matches a face image registered in the face image memory in a case of inhibition of a predetermined camera function, the camera function controller releases the inhibition of the predetermined camera function.

The system may further include: an emergency communication detector for detecting occurrence of an emergency communication to inform the camera function controller of the occurrence of the emergency communication; and a face image memory for previously registering a face image of each authorized user, wherein, in one of cases where the camera function controller is informed of the occurrence of the emergency communication in a case of inhibition of a predetermined camera function and where an input image picked up by the camera matches a face image registered in the face image memory in a case of inhibition of the predetermined camera function, the camera function controller releases the inhibition of the predetermined camera function.

The radio station may transmit the camera-function limiting signal in a short-range radio communication scheme, which is different from a radio communication scheme of the mobile communication terminal. In an embodiment, the short-range radio communication scheme may be one of Bluetooth ^{(R)}, UWB (Ultra Wide Band), and wireless LAN.

According to another aspect of the present invention, each of the at least one operation-limited area is determined by the mobile communication terminal, wherein the mobile communication terminal includes: a location detector for detecting a location of the mobile communication terminal; an operation-limited area memory storing operation-limited area location data; and an area decision section for searching the operation-limited area memory for a detected location of the mobile communication terminal to determine whether the mobile communication terminal is located within an operation-limited area.

The location detector may be a GPS positioning section for receiving global positioning system (GPS) signals to detect the location of the mobile communication terminal.

The camera functions may include image pickup function, auto-focusing and zooming function, strobe function, shutter-sound generating function, and video telephone function.

According to the present invention, a method for limiting a plurality of camera functions in a mobile communication terminal equipped with a camera may comprise: preparing at least one operation-limited area, wherein the mobile communication terminal is allowed to determine whether the mobile communication terminal is located within an operation-limited area; storing camera-function limitation data for each of the at least one operation-limited area, the camera-function limitation data indicating selective inhibition of the plurality of camera functions; and selectively inhibiting the plurality of camera functions depending on camera-function limitation data corresponding to an operation-limited area in which the mobile communication terminal is located.

According to the present invention, a mobile communication terminal which is equipped with a camera and has a plurality of camera function, may include: a radio receiver for receiving a camera-function limiting signal from a radio station; a signal decoder for decoding the camera-function limiting signal to produce camera-function limitation data indicating selective inhibition of the plurality of camera functions; and a camera function controller for selectively inhibiting the plurality of camera functions depending on camera-function limitation data.

The camera function controller may release an inhibited camera function when a predetermined condition is satisfied.

According to the present invention, a mobile communication terminal which is equipped with a camera and has a plurality of camera functions may also include: a location detector for detecting a location of the mobile communication terminal; a memory storing camera-function limitation data for each of at least one operation-limited area, wherein the camera-function limitation data indicates selective inhibition of the plurality of camera functions; an area decision section for searching the operation-limited area memory for a detected location of the mobile communication terminal to determine whether the mobile communication terminal is located within an operation-limited area; and a camera function controller for selectively inhibiting the plurality of camera functions depending on camera-function limitation data corresponding to a found operation-limited area.

As described above, the camera functions of a camera-equipped mobile communication terminal are selectively inhibited 1) by a camera-function limiting signal broadcast by a radio station installed at a predetermined location or 2) based on location information detected by the GPS system, predetermined operation-limited area data and camera-function inhibition data.

Installation of a radio station, especially a short-range radio station, at a desired location can provide a relatively small operation-limited area, resulting in cost-effective and reasonable operation-limitation of camera functions. Similarly, in the case of using the GPS system, the location of a mobile communication terminal can be accurately measured without the need of radio stations for operation limitation, allowing cost-effective and reasonable operation-limitation of camera functions.

In addition, a camera function, which is prohibited or inappropriate around the predetermined location or in the detected operation-limited area, can be automatically inhibited without any dependence on user's good manners. On the other hand, a camera function, which is not prohibited or can be made without any problem, can be normally operated. In this manner, only inappropriate camera functions are inhibited and other camera functions are permitted, achieving compulsory but reasonable operation limitation of camera functions.

In addition, an inhibited camera function can be made active again when a predetermined condition is satisfied, for example, an emergency occurs and/or a user is authenticated, resulting in enhanced convenience of the mobile communication terminal for users.
Fig. 1 is a diagram showing an exemplary network system employing an operation limiting system;
Fig. 2 is a block diagram showing a short-range radio station used in the exemplary operation limiting system;
Fig. 3 is a schematic block diagram showing a function structure of a camera-equipped mobile communication terminal used in the exemplary operation limiting system ;
Fig. 4A is a diagram showing a function inhibition operation in the exemplary operation limiting system ;
Fig. 4B is a diagram showing a format of an operation-limitation packet used in the exemplary operation limiting system;
Fig. 4C is a diagram showing an example of operation inhibition and permission flags set in the operation-limitation packet of Fig. 4B;
Fig. 5 is a flowchart showing a function inhibition operation in the exemplary operation limiting system;
Fig. 6 is a schematic block diagram showing a function structure of a camera-equipped mobile communication terminal used in an exemplary operation limiting system ;
Fig. 7 is a flowchart showing a function inhibition operation in the exemplary operation limiting system ;
Fig. 8 is a schematic block diagram showing a function structure of a camera-equipped mobile communication terminal used in an exemplary operation limiting system;
Fig. 9 is a flowchart showing a function inhibition operation in the exemplary operation limiting system;
Fig. 10 is a schematic block diagram showing a function structure of a camera-equipped mobile communication terminal used in an exemplary operation limiting system ;
Fig. 11 is a diagram showing a network system employing an exemplary operation limiting system;
Fig. 12 is a schematic block diagram showing a function structure of a camera-equipped mobile communication terminal used in an exemplary operation limiting system ;
Fig. 13 is a diagram showing an example of contents of operation limitation data and operation limited areas in the exemplary camera-equipped mobile communication terminal;
Fig. 14 is a flowchart showing a function inhibition operation in the exemplary operation limiting system;
Fig. 15 is a schematic block diagram showing a function structure of a camera-equipped mobile communication terminal used in an exemplary operation limiting system;
Fig. 16 is a schematic block diagram showing a function structure of a camera-equipped mobile communication terminal used in an exemplary operation limiting system;
Fig. 17 is a schematic block diagram showing a function structure of a camera-equipped mobile communication terminal used in an exemplary operation limiting system; and
Fig. 18 is a block diagram showing a camera-equipped mobile communication terminal used in an exemplary operation limiting system according to a ninth embodiment of the present invention.

Embodiments and aspects of embodiments of the invention are described below.

### System configuration

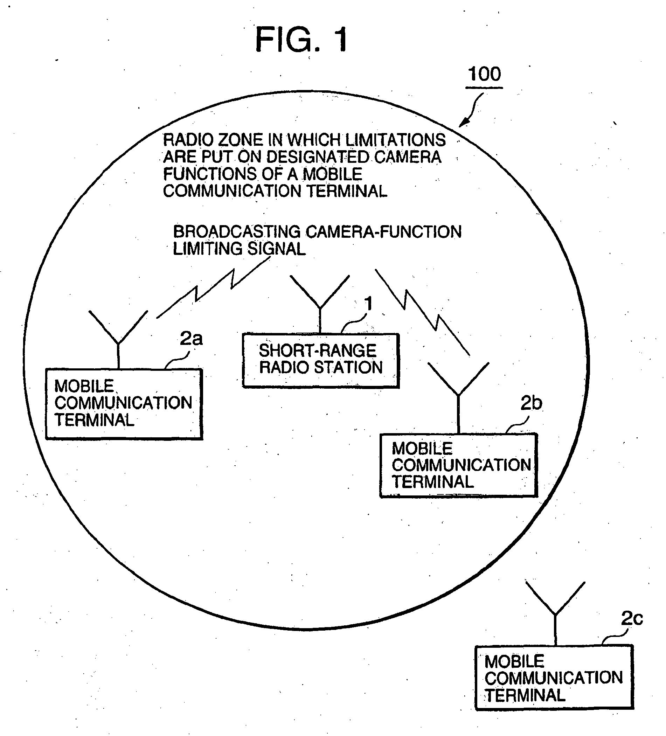

Referring to Fig. 1, an exemplary operation limiting system is provided with a radio station for each geographical area where the camera functions of a camera-equipped mobile communication terminal are selectively inhibited from use. Here, it is assumed that the radio station is a short-range radio station 1 and is further assumed for the sake of simplicity that the short-range radio station 1 defines an operation-limitation radio zone 100 and a plurality of mobile communication terminals (here, 2a and 2b) are located within the radio zone 100 and a mobile communication terminal is located out of the radio zone 100. As described later, the mobile communication terminals 2a and 2b within the radio zone 100 are inhibited from operating the designated camera-related functions and the mobile communication terminal 2c out of the radio zone 100 is not inhibited.

The operation-limitation radio zone 100 of the short-range radio station 1 is, for example, about 10 meters in radius. The mobile communication terminals 2a-2c are typically a camera-equipped mobile telephone terminal.

### Short-range radio station

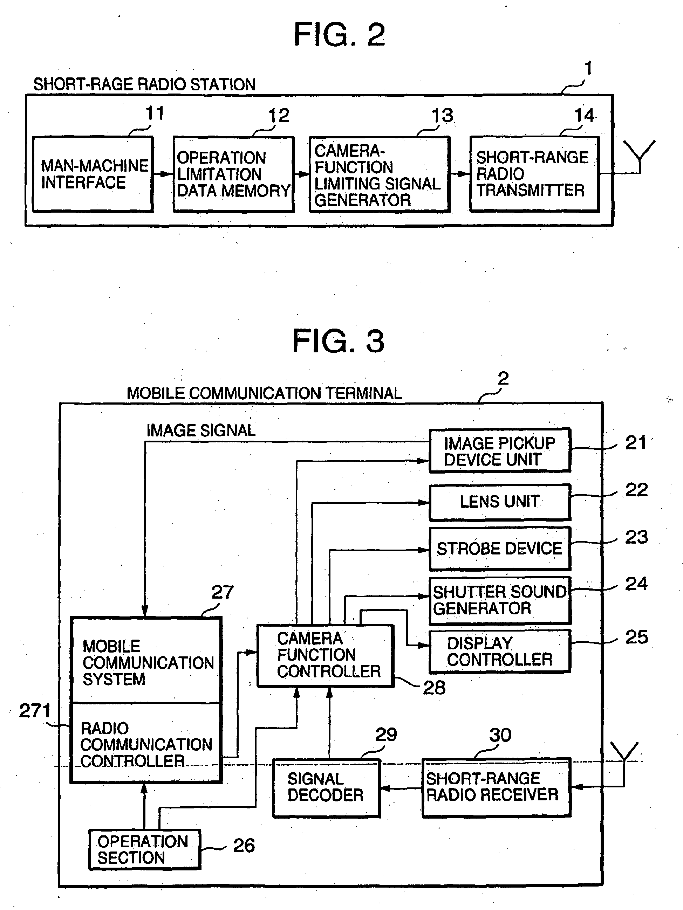

As shown in Fig. 2, the short-range radio station 1 includes a man-machine interface 11, an operation-limitation data memory 12, a camera-function limiting signal generator 13 and a short-range radio transmitter 14. The man-machine interface 11 may be formed by an input device such as a keypad and a display such as a LCD. The operation-limitation data memory 12 is composed of a plurality of registers, which store operation-limitation data inputted through the man-machine interface 11. The operation-limitation data may be composed of a string of control flags.

The camera-function limiting signal generator 13 generates a camera-function limiting signal from the string of control flags stored in the operation-limitation data memory 12. The camera-function limiting signal may be a packet composed of a header and a payload including a set of control flags. The short-range radio transmitter 14 broadcasts the camera-function limiting signal with a relatively small transmission power at predetermined time intervals in a predetermined short-range radio transmission system such as Bluetooth (Registered TM), UMB (Ultra Wide Band) or Wireless LAN standard. In Fig. 1, the mobile communication terminals 2a and 2b within the radio zone 100 can receive the broadcast camera-function limiting signal and the mobile communication terminal 2c out of the radio zone 100 cannot substantially receive it.

### Mobile communication terminal

Each of the mobile communication terminals (here, 2a-2c) has the same function block structure. Hereinafter, for simplicity, each mobile communication terminal is referred to as a mobile communication terminal 2.

As shown in Fig. 3, the mobile communication terminal 2 is provided with a camera section composed of an image pickup device unit 21, a lens unit 22, and a strobe device 23. The image pickup device unit 21 includes an image sensor such as CCD sensor, CMOS sensor or the like, which may be used for video and photograph shooting. The lens unit 22 includes a set of lenses allowing focusing and zooming. The strobe device 23 emits a strobe light when photo-shooting. A shutter-sound generator 24 generates a shutter sound when shooting so as to avoid stealing a camera shot. A display controller 25 controls a display such as a liquid crystal display device (LCD), which is usually provided on a main body of the terminal 2.

The mobile communication terminal 2 is further provided with an operation section 26 such as a keypad to enter data or instructions. A mobile communication system 27 including a radio communication controller 271 is provided to perform predetermined mobile communication operations.

A camera function controller 28, which may be implemented in a program-controlled processor (not shown), controls the above-described camera section, the shutter-sound generator 24 and the display controller 25 depending on a camera-function limiting signal received from the short-range radio station 1. The camera function controller 28 controls the camera section to capture still/video images, which are output as an image signal to the mobile communication system 27. The captured image can be superimposed on another image received from the other party and the combined image is displayed on the display device.

The mobile communication terminal 2 is further provided with a signal decoder 29 and a short-range radio receiver 30. The short-range radio receiver 30 receives a camera-function limiting signal from the short-range radio station 1 and the signal decoder 29 decodes the received camera-function limiting signal to output camera function control flags to the camera function controller 28. When no camera-function limiting signal is received, the signal decoder 29 notifies the camera function controller 28 of no signal. As described later, the camera function controller 28 selectively inhibits the camera functions including image pickup, focusing/zooming, flashing, shutter-sound generating, and the likes, depending on the camera function control flags.

### Camera-function limiting signal

Taking a system of Fig. 1 as an example, the camera-function limiting signal will be described in detail.

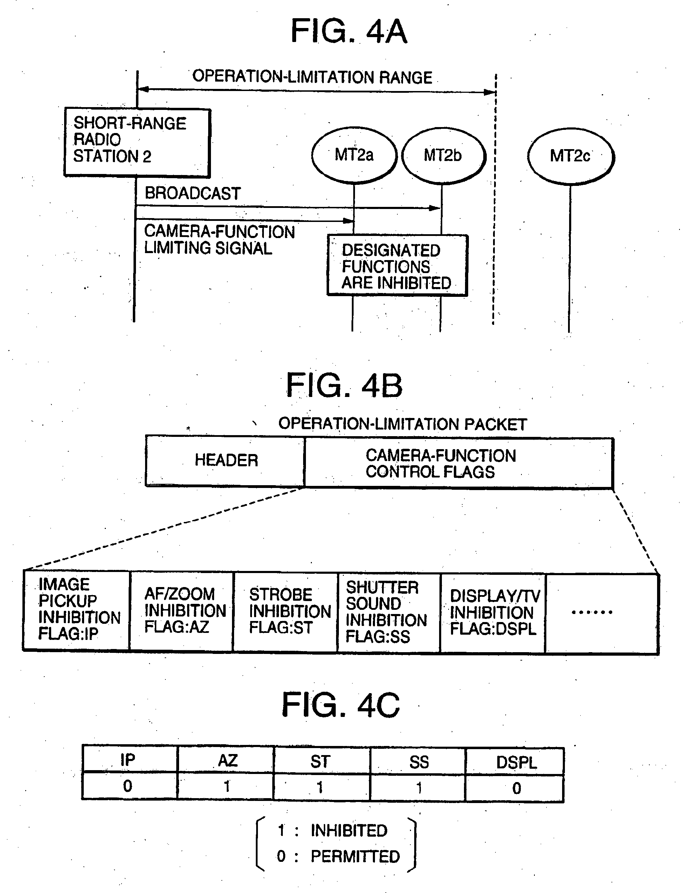

Referring to Fig. 4A, the short-range radio station 2 broadcasts the camera-function limiting signal. The mobile communication terminals 2a and 2b within the radio zone 100 can receive the broadcast camera-function limiting signal. However, the mobile communication terminal 2c out of the radio zone 100 cannot substantially receive it. Accordingly, for only the mobile communication terminals 2a and 2b within the radio zone 100, camera functions designated by the received camera-function limiting signal are inhibited from operation.

As shown in Fig. 4B, the camera-function limiting signal is typically a packet composed of a header and a payload including a plurality of camera-function control flags. For example, the camera-function control flags include an image pickup inhibition flag IF, an auto-focusing/zooming inhibition flag AZ, a strobe inhibition flag ST, a shutter-sound inhibition flag SS, a display/TV (video telephone) inhibition flag DSPL and, if necessary, other operation inhibition flags. In this example, the camera-function control flags are initially reset to 0s.

An example of the camera-function control flags is shown in Fig. 4C. In this example, the control flags are set to IP= 0, AZ=1, ST=1, SS=1 and DSPL=0, where 1 indicates inhibition and 0 indicates permission. Therefore, the auto-focusing/zooming function, the strobe function and the shutter-sound generating function are all inhibited and the image pickup function and the display/TV (video telephone) function are permitted. In this manner, by selectively setting the camera-function control flags to 1, an arbitrary one or any combination of the camera functions can be inhibited.

Alternatively, different codes each identifying predetermined camera functions may be written into the payload of the packet. In this case, the signal decoder 29 outputs camera-function control flags set to 1 corresponding to codes written in the payload.

### Operation limitation mode

As described above, the operation limitation mode in the mobile communication terminal 2 includes the following inhibition modes:
- Inhibition of all camera functions: image capturing of the image pickup device unit 21 and image displaying of the display device are fully inhibited. At places such as crowded public trains, museums or research laboratories, for example, all camera functions including photography and video shoot should be inhibited from use. In the above example, such a complete inhibition mode is active when all the camera-function control flags are set to 1s.
- Inhibition of auto-focussing and zooming functions:
   lens movement of the lens unit 22 for focusing and zooming up/down is inhibited. At public places where zoom-up shooting is not appropriate, for example, the auto-focussing and zooming functions should be inhibited from use. In the above example, such an auto-focus/zoom inhibition mode is active when the auto-focusing/zooming inhibition flag AZ is set to 1.
- Inhibition of strobe function: flashing of the strobe device 23 is inhibited. At places such as museums, movie theaters or zoological gardens where the taking of photographs using a strobe light is forbidden or inappropriate, for example, the strobe function should be inhibited from use. In the above example, such a strobe inhibition mode is active when the strobe inhibition flag ST is set to 1.
- Inhibition of shutter-sound generating function:
   shutter-sound generation of the shutter-sound generator 24 is inhibited. In the above example, such a shutter-sound inhibition mode is active when the shutter-sound inhibition flag SS is set to 1.
- Inhibition of display/TV (video telephone) function: image displaying control of the display controller 25 is inhibited. At places such as museums or movie theaters, for example, the display/TV (video telephone) function should be inhibited from use. In the above example, such a video telephone inhibition mode is active when display/TV (video telephone) inhibition flag DSPL is set to 1.

### Camera-function limiting operation

As described above, when the short-range radio receiver 30 has received the camera-function limiting signal from the short-range radio station 1, the signal decoder 29 decodes the received camera-function limiting signal to output the camera-Function control flags as shown in Fig. 4B to the camera function controller 28.

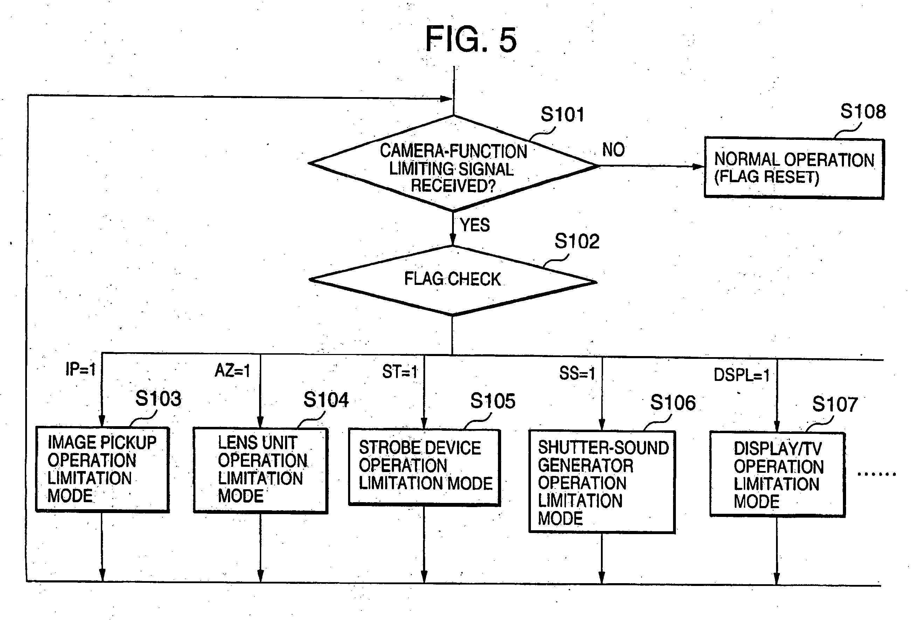

As shown in Fig. 5, the camera function controller 28 determines whether the camera-function control signal has been received (step S101) . When having received the camera-function control flags from the signal decoder 29 (YES in step S101), the camera function controller 28 checks the camera-function control flags to set corresponding limitation modes as described before (steps S102 and S103-S107).

More specifically, when the image pickup inhibition flag IP = 1, the camera function controller 28 inhibits the image pickup device unit 21 from capturing images (step S103). When the auto-focusing/zooming inhibition flag AZ = 1, the camera function controller 28 inhibits the lens unit 22 from auto-focusing and zooming (step S104). When the strobe inhibition flag ST = 1, the camera function controller 28 inhibits the strobe device 23 from flashing (step S105). When the shutter-sound inhibition flag SS = 1, the camera function controller 28 inhibits the shutter-sound generator 24 from shutter-sound generation (step S106). When the display/TV (video telephone) inhibition flag DSPL = 1, the camera function controller 28 inhibits the display controller 25 from image/video displaying (step S107).

In this manner, the camera function controller 28 repeatedly performs the steps S101-S107 at regular intervals as long as the camera-function control signal is received. When the mobile communication terminal leaves the operation-limitation radio zone 100 and thereby no camera-function control signal is received (NO in step S101), the camera function controller 28 resets all the camera-function control flags to 0 and returns to the normal operation (step S108).

As described above, a mobile communication terminal 2 can be set to a designated operation limitation state depending on the camera-function limiting signal received from the short-range radio station 1. In addition, a mobile communication terminal 2 may also have a limitation releasing function of selectively releasing the limitations of designated operations depending on whether an emergency communication is needed. The camera-function limiting signal broadcast by the short-range radio station 1 may be set so that such a limitation releasing function is permitted.

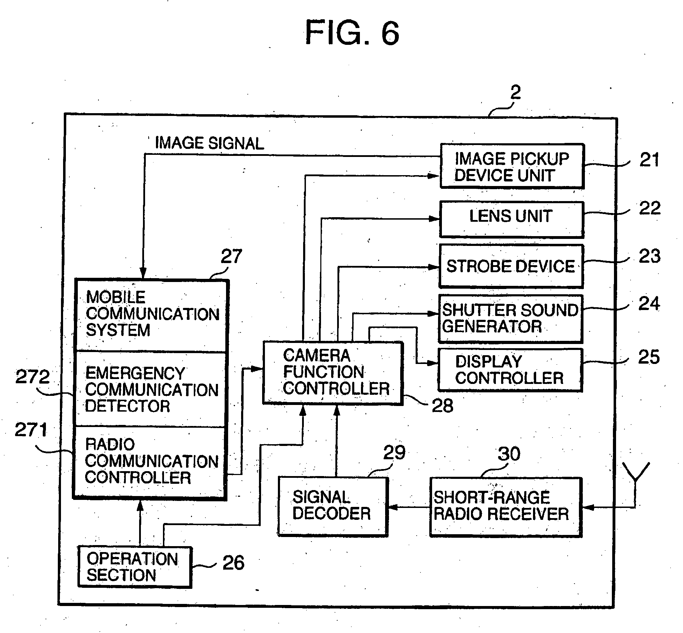

As shown in Fig. 6, the mobile communication terminal 2 may be further provided with an emergency communication detector 272 in the mobile communication system 27. Blocks similar to those previously described with reference to Fig. 3 are denoted by the same reference numerals and descriptions of the similar blocks will be omitted.

The emergency communication detector 272 determines whether an emergency communication is requested by a user operating a ten-key of the operation section 26. For example, when the user makes an emergency call such as a 911/999 call, the emergency communication detector 272 detects such an emergency communication request and notifies the camera-function controller 28 of occurrence of emergency. In response to the occurrence of emergency, the camera-function controller 28, even in the case of operation limitation mode, sets the current operation limitation mode to a predetermined emergency operation mode. Even when all camera functions have been inhibited, one or more predetermined camera function can be made active by resetting corresponding operation control flags to 0. For example, when all of IP, AZ, ST, SS and DSPL are 1s, the camera-function controller 28, when detecting an emergency, resets the image pickup control flag IP and the display/TV (video telephone) operation control flag DSPL to 0s to permit the use of TV telephone function.

The emergency operation mode preferably enables at least a TV (video) telephone function from the viewpoint of the amount of information necessary for emergency communication. One or more camera functions other than the TV (video telephone) telephone function, for example, a photograph shooting function, may be selectively made active.

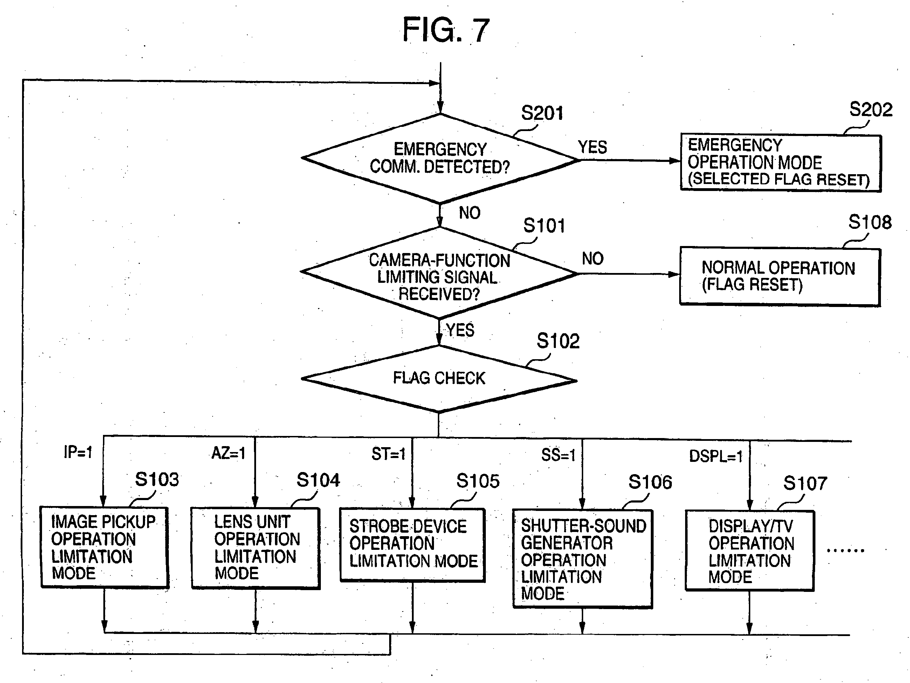

Referring to Fig. 7, the camera function controller 28 determines whether an emergency communication is detected (step S201) . When having detected the emergency communication (YES in step S201), the camera function controller 28 resets predetermined operation control flags to 0 so that the current operation mode is changed to the emergency operation mode (step S202). When no emergency communication is detected (NO in step S201), the above-described steps S101-S108 are performed.

A mobile communication terminal 2 according to an embodiment of the present invention also has a limitation releasing function of selectively releasing the limitations of designated operations depending on whether a captured face matches a previously registered face. The camera-function limiting signal broadcast by the short-range radio station 1 may be set so that such a limitation releasing function is permitted.

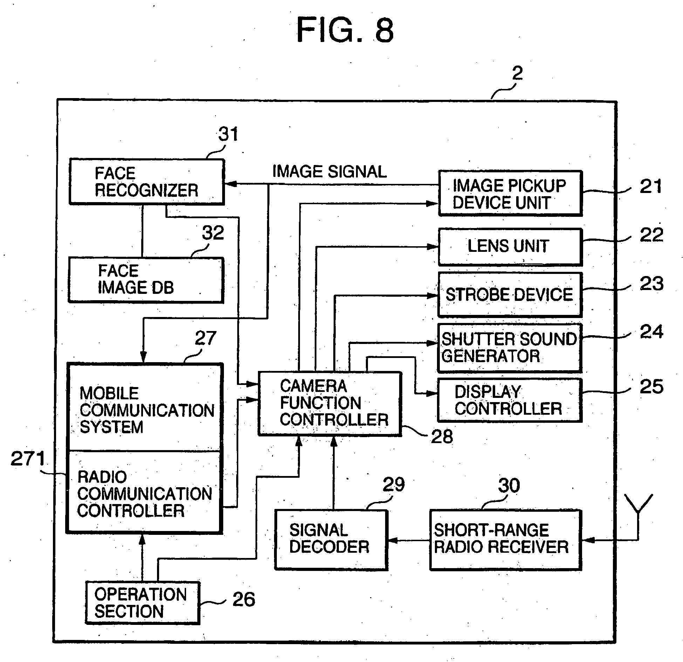

As shown in Fig. 8, the mobile communication terminal 2 according to the embodiment is further provided with a face recognizer 31 and a face image database 32. Blocks similar to those previously described with reference to Fig. 3 are denoted by the same reference numerals and descriptions of the similar blocks will be omitted.

The face image database 32 stores face image data of authorized users. The face images are captured through the camera function of the mobile communication terminal 2 and the captured face image data are registered into the face image database 32 through the face recognizer 31. When a user wishes to use a specific camera function (e.g. TV telephone function) , the face of the user is captured by the camera function and the face recognizer 31 determines whether the captured face matches one of the registered faces. When a match is found, the camera function controller 28 makes the TV telephone function active even in the case of the display/TV (video telephone) function inhibition.

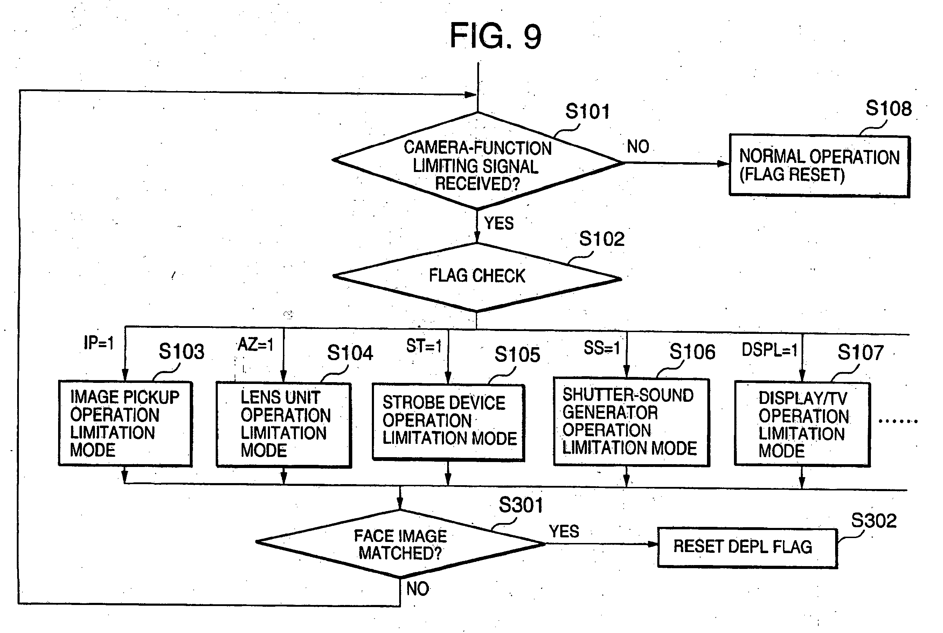

In Fig. 9, the camera function controller 28 performs operation limitation controls as described in the steps S101-S107 of Fig. 5. In the case where the limitation mode settings have been completed, the face recognizer 31 determines whether the captured face matches one of the registered faces (step S301). If no match is found (NO in step S301), the steps S101-S107 are repeatedly performed as described before. If a match is found (YES in step S301), the face recognizer 31 notifies the camera function controller 28 that the present user is an authorized user. The camera function controller 28, even in the case of the display/TV (video telephone) function inhibition, resets the display/TV (video telephone) control flag DSPL to 0 to permit the authorizeduser touse the TV telephone function (step S302).

A mobile communication terminal 2 according to a further embodiment of the present invention also has a limitation releasing function of selectively releasing the limitations of designated operations depending on whether an emergency communication is needed or whether a captured face matches a previously registered face. The camera-function limiting signal broadcast by the short-range radio station 1 may be set so that such a limitation releasing function is permitted.

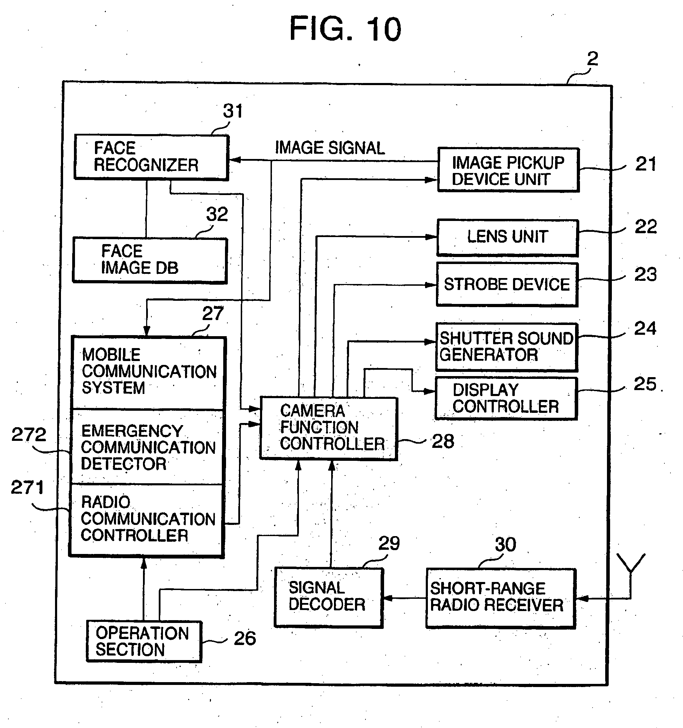

As shown in Fig. 10, the mobile communication terminal 2 according to the further embodiment is further provided with an emergency communication detector 272 in the mobile communication system 27, a face recognizer 31, and a face image database 32. Blocks similar to those previously described with reference to Fig. 3 are denoted by the same reference numerals and descriptions of the similar blocks will be omitted.

It is assumed that the camera-function limiting signal broadcast by the short-range radio station 1 is set so that, even in the case of display/TV (video telephone) function inhibition, the TV telephone function is permitted when an emergency occurs or when the face of an authorized user is transmitted to the other party. In this case, even when all of AZ, ST, SS and DSPL are 1s, the camera-function controller 28, when detecting an emergency or when the captured face matches one of the registered faces, resets the display/TV (video telephone) inhibition flag DSPL to 0 to permit the use of TV telephone function. Since the detailed operations of the fourth embodiment are similar to those described in the second and third embodiments, the detailed descriptions are omitted.

### System configuration

In the above examples, an operation limited geographical area is determined by the radio propagation of the camera-function limiting signal from the short-range radio station 1. However, the present invention is not limited to these examples. Positioning information obtained from GPS (Global Positioning System) satellites may also be used to determine the location of a mobile communication terminal 2, thereby determining whether the mobile communication terminal 2 is located in a predetermined operation limited geographical area where the camera functions of a camera-equipped mobile communication terminal are selectively inhibited from use.

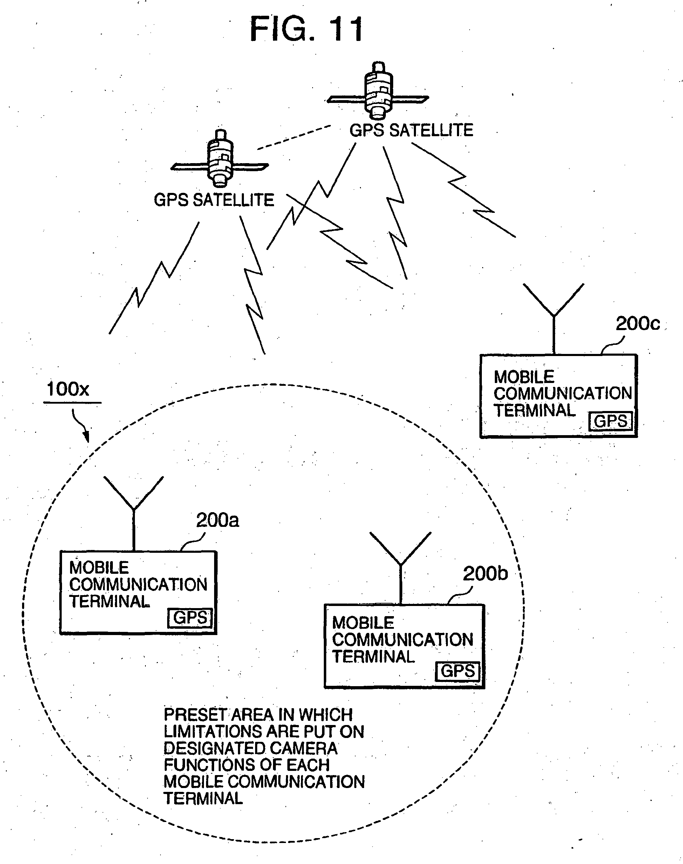

Referring to Fig. 11, an exemplary operation limiting system is provided with four or more GPS satellites and a plurality of camera-equipped mobile communication terminals, each of which is provided with a GPS receiver and a location calculator. Further, each of the mobile communication terminals stores operation-limitation area information, which is used to determine whether the mobile communication terminal 2 is located in an operation limitation area. Here, it is assumed for the sake of simplicity that an operation-limitation area 100x is previously set in each mobile communication terminal and a plurality of mobile communication terminals (here, 200a and 200b) are located within the operation-limitation area 100x and a mobile communication terminal 200c is located out of the operation-limitation area 100x. As described later, the mobile communication terminals 200a and 200b within the operation-limitation area 100x are inhibited from operating the designated camera-related functions and the mobile communication terminal 200c out of the operation-limitation area 100x is not inhibited. Since the operation-limitation area 100x is determined by location information such as latitude and longitude, its size has no upper limit but a lower limit determined by the positioning resolution of the GPS system.

In the case where a mobile communication terminal is located inside a building or the like and thereby cannot receive GPS positioning signals, a relay station for GPS positioning may be installed in abuilding so that mobile communication terminals inside the building can receive GPS location data through the mobile communication channel.

### Mobile communication terminal

Each of the mobile communication terminals (here, 200a-200c) has the same function block structure. Hereinafter, for simplicity, each mobile communication terminal is referred to as a mobile communication terminal 200.

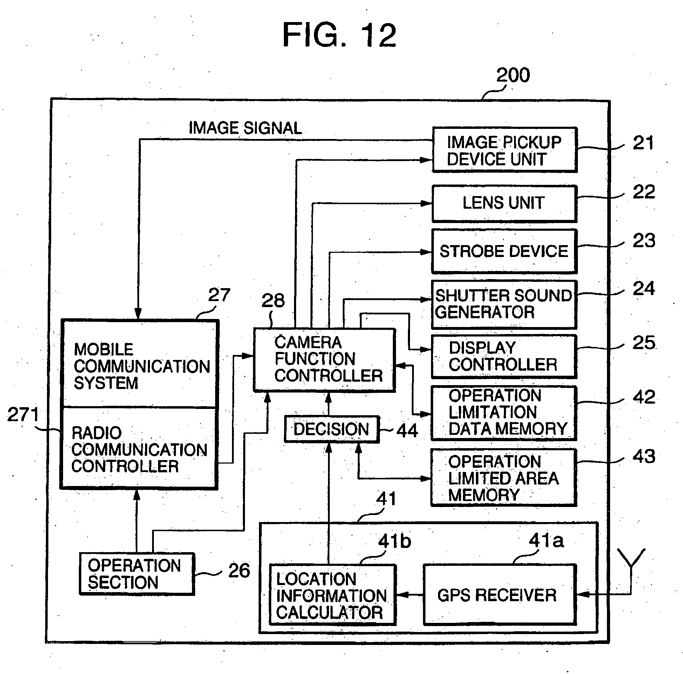

As shown in Fig. 12, the mobile communication terminal 200 is provided with a camera section composed of an image pickup device unit 21, a lens unit 22, and a strobe device 23. The image pickup device unit 21 includes an image sensor such as CCD sensor, CMOS sensor or the like, which may be used for video and photograph shooting. The lens unit 22 includes a set of lenses allowing focusing and zooming. The strobe device 23 emits a strobe light when photo-shooting. A shutter-sound generator 24 generates a shutter sound when shooting so as to avoid stealing a camera shot. A display controller 25 controls a display such as a liquid crystal display device (LCD), which is usually provided on a main body of the terminal 200.

The mobile communication terminal 200 is further provided with an operation section 26 such as a keypad to enter data or instructions. A mobile communication system 27 including a radio communication controller 271 is provided to perform predetermined mobile communication operations.

A camera function controller 28, which may be implemented in a program-controlled processor (not shown), controls the above-described camera section, the shutter-sound generator 24 and the display controller 25 depending on whether the mobile communication terminal 200 is located in a predetermined operation limitation area, which will be described later. The camera function controller 28 controls the camera section to capture still/video images, which are output as an image signal to the mobile communication system 27. The captured image can be superimposed on another image received from the other party and the combined image is displayed on the display device (not shown).

The mobile communication terminal 200 is further provided with a GPS positioning section 41 composed of a GPS receiver 41a and a location information calculator 41b, an operation limitation data memory 42, an operation limited area memory 43, and an area decision section 44.

The GPS receiver 41a receives positioning information from the GPS satellites to output it to the location information calculator 41b. The location information calculator 41b calculates location information of the mobile communication terminal 200 from the positioning information to output it to the area decision section 44.

The operation limitation data memory 42 stores operation-limitation data including camera function control flags for each operation limited area. The operation limited area memory 43 stores location data (e. g. latitude and longitude) of each operation limited area. Since the operation-limitation data are associated with each of the operation limited areas, the operation limitation data memory 42 and the operation limited area memory 43 may be combined to a single memory.

The area decision section 44, when receiving the location information from the location information calculator 41b, searches the operation limited area memory 43 for an operation limited area in which the mobile communication terminal 200 is now located. A found operation limited area is output to the camera function controller 28. The camera function controller 28 searches the operation limitation data memory 42 for camera function control flags corresponding to the found operation limited area. As described later, the camera function controller 28 selectively inhibits the camera functions including image pickup, focusing/zooming, flashing, shutter-sound generating, and the likes, depending on the camera function control flags.

As described before, in the case where the operation limitation data memory 42 and the operation limited area memory 43 may be combined to a single memory, the area decision section 44 is incorporated in the camera function controller 28.

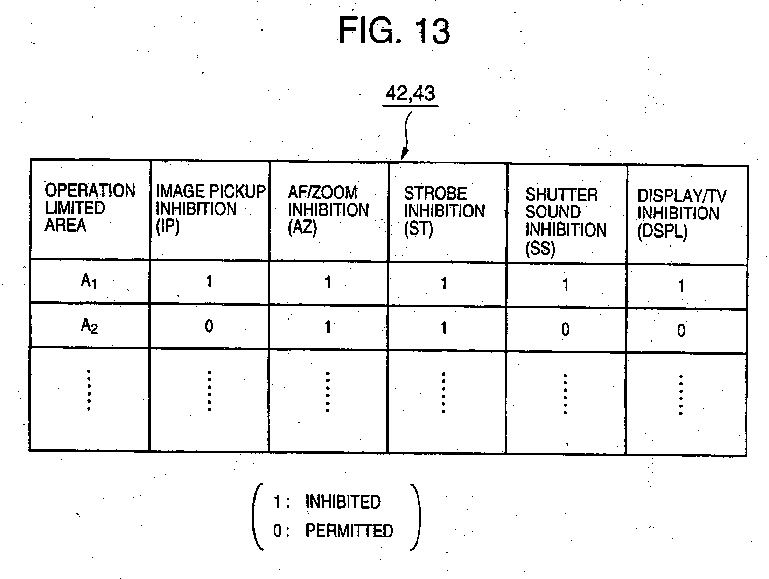

Referring to Fig. 13, a combined memory of the operation limitation data memory 42 and the operation limited area memory 43 contains camera function control flags (IP, AZ, ST, SS, DSPL) for each of operation limited areas (A1, A2, ... ).

As shown in Fig. 13, the camera-function control flags include an image pickup inhibition flag IP, an auto-focusing/zooming inhibition flag AZ, a strobe inhibition flag ST, a shutter-sound inhibition flag SS, a display/TV (video telephone) inhibition flag DSPL and, if necessary, other operation inhibition flags.

In this example, the operation limited area A1 is set to IP=1, AZ=1, ST=1, SS=1 and DSPL=1, where 1 indicates inhibition and 0 indicates permission. Therefore, all camera functions: the image pickup function, the auto-focusing/zooming function, the strobe function, the shutter-sound generating function and the display/TV (video telephone) function, areinhibited. In contrast, the operation limited area A2 is set to IP=0, AZ=1, ST=1, SS=0 and DSPL=0. Therefore, although the auto-focusing/zooming function and the strobe function are both inhibited, the image pickup function, the shutter-sound generating function and the display/TV (video telephone) function are permitted. In this manner, by selectively setting the camera-function control flags to 1 for each operation limited area, an arbitrary one or any combination of the camera functions can be inhibited in each operation limited area.

### Operation limitation mode

As described above, the operation limitation mode in the mobile communication terminal 200 includes the following inhibition modes:
- Inhibition of all camera functions: image capturing of the image pickup device unit 21 and image displaying of the display device are entirely inhibited. At places such as crowded public trains, museums or research laboratories, for example, all camera functions including photography and video shoot should be inhibited from use. In the above example, such a complete inhibition mode is active when all the camera-function control flags are set to 1s.
- Inhibition of auto-focussing and zooming functions:
   lens movement of the lens unit 22 for focusing and zooming up/down is inhibited. At public places where zoom-up shooting is not appropriate, for example, the auto-focussing and zooming functions should be inhibited from use. In the above example, such an auto-focus/zoom inhibition mode is active when the auto-focusing/zooming inhibition flag AZ is set to 1.
- Inhibition of strobe function: flashing of the strobe device 23 is inhibited. At places such as museums, movie theaters or zoological gardens where the taking of photographs using a strobe light is forbidden or inappropriate, for example, the strobe function should be inhibited from use. In the above example, such a strobe inhibition mode is active when the strobe inhibition flag ST is set to 1.
- Inhibition of shutter-sound generating function:
   shutter-sound generation of the shutter-sound generator 24 is inhibited. In the above example, such a shutter-sound inhibition mode is active when the shutter-sound inhibition flag SS is set to 1.
- Inhibition of display/TV (video) function: image displaying control of the display controller 25 is inhibited. At places such as museums or movie theaters, for example, the display/TV(video) function should be inhibited from use. In the above example, such a display/TV (video telephone) inhibition mode is active when display/TV (video telephone) inhibition flag DSPL is set to 1.

### Camera-function limiting operation

It is assumed that the operation limitation data memory 42 and the operation limited area memory 43 are combined to a single memory as shown in Fig. 13 and the area decision section 44. is incorporated in the camera function controller 28.

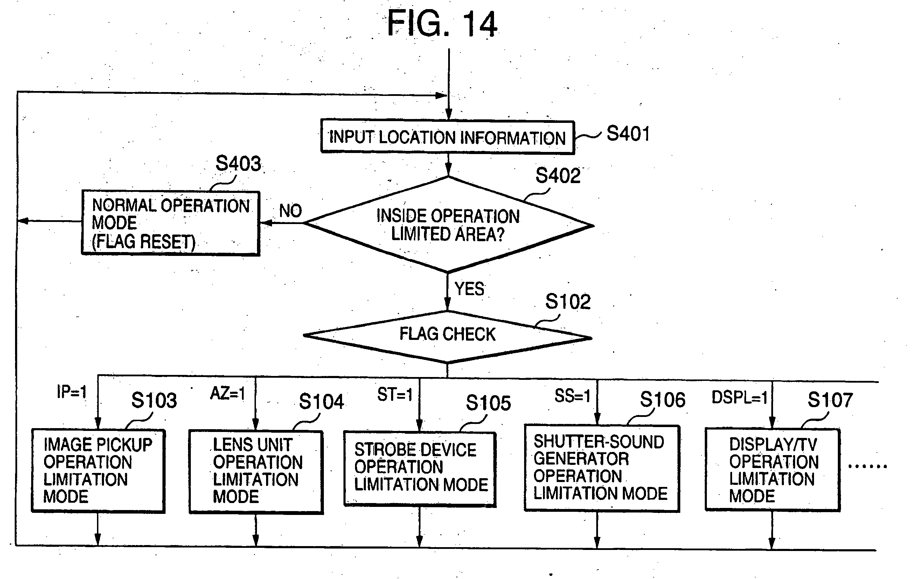

As shown in Fig. 14, the camera function controller 28 inputs location information from the location information calculator 41b (step S401). Thereafter, the camera function controller 28 searches the combined memory as shown in Fig. 13 for an operation limited area in which the location information is included (step S402). When a match is found, that is, the mobile communication terminal 200 is located in an operation limited area (YES in step S402) , the camera function controller 28 reads camera function control flags corresponding to the found operation limited area and checks the camera function control flags to set corresponding limitation modes as described before (steps S102 and S103-S107).

More specifically, when the image pickup inhibition flag IP = 1, the camera function controller 28 inhibits the image pickup device unit 21 from capturing images (step S103). When the auto-focusing/zooming inhibition flag AZ = 1, the camera function controller 28 inhibits the lens unit 22 from auto-focusing and zooming (step S104). When the strobe inhibition flag ST = 1, the camera function controller 28 inhibits the strobe device 23 from flashing (step S105). When the shutter-sound inhibition flag SS = 1, the camera function controller 28 inhibits the shutter-sound generator 24 from shutter-sound generation (step S106). When the display/TV (video telephone) inhibition flag DSPL = 1, the camera function controller 28 inhibits the display controller 25 from image/video displaying (step S107).

When it is determined that the location information gets out of an operation limited area, that is, the mobile communication terminal 200 leaves the operation limited area (NO in step S402), the camera function controller 28 resets all the camera-function control flags to 0 and returns to the normal operation (step S403). In this manner, the camera function controller 28 repeatedly performs the steps S401, S401 and S102-S107 at regular intervals.

As described above, a mobile communication terminal 200 can be set to a designated operation limitation state depending on whether the location obtained by the GPS system falls into an operation limitation area stored in the operation limited area memory 43. In addition, a mobile communication terminal 200 may also have a limitation releasing function of selectively releasing the limitations of designated operations depending on whether an emergency communication is needed.

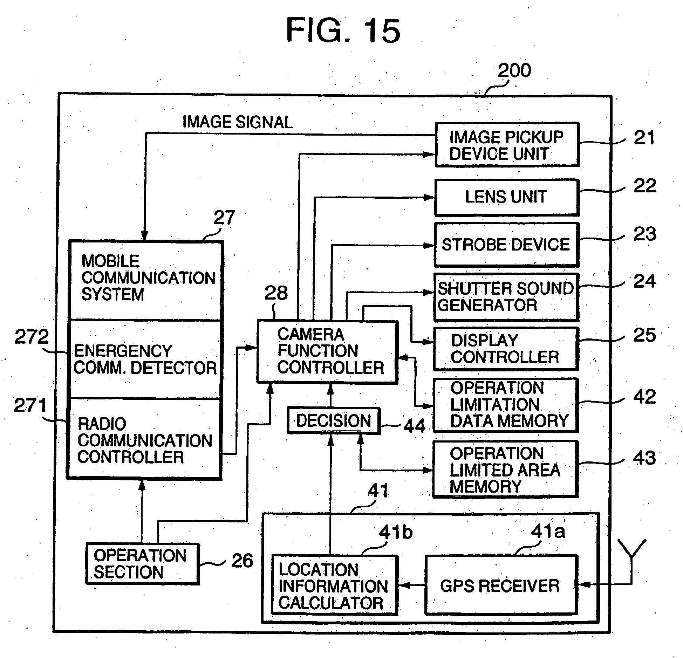

As shown in Fig. 15, the mobile communication terminal 200 is further provided with an emergency communication detector 272 in the mobile communication system 27. Blocks similar to those previously described with reference to Fig. 12 are denoted by the same reference numerals and descriptions of the similar blocks will be omitted.

The emergency communication detector 272 determines whether an emergency communication is requested by a user operating a ten-key of the operation section 26. For example, when the user makes an emergency call such as a 911/999 call, the emergency communication detector 272 detects such an emergency communication request and notifies the camera-function controller 28 of occurrence of emergency. In response to the occurrence of emergency, the camera-function controller 28, even in the case of operation limitation mode, sets the current operation limitation mode to a predetermined emergency operation mode. Even when all camera functions have been inhibited, one or more predetermined camera function is made active by resetting corresponding operation control flags to 0. For example, when all of IP, AZ, ST, SS and DSPL are 1s, the camera-function controller 28, when detecting an emergency, resets the image pickup control flag IP and the display/TV (video telephone) operation control flag DSPL to 0s to permit the use of TV telephone function.

The emergency operation mode preferably enables at least a TV (video) telephone function from the viewpoint of the amount of information necessary for emergency communication. One or more camera functions other than the TV (video) telephone function, for example, a photograph shooting function, may be selectively made active.

An operation limitation releasing control is basically similar to that shown in Fig. 7. As shown in Fig. 7, the camera function controller 28 determines whether an emergency communication is detected (step S201). When having detected the emergency communication (YES in step S201), the camera function controller 28 resets predetermined operation control flags to 0 so that the current operation mode is changed to the emergency operation mode (step S202). When no emergency communication is detected (NO in step S201), the above-described steps S101-S108 are performed.

A mobile communication terminal 200 according to a further embodiment of the present invention also has a limitation releasing function of selectively releasing the limitations of designated operations depending on whether a captured face matches a previously registered face.

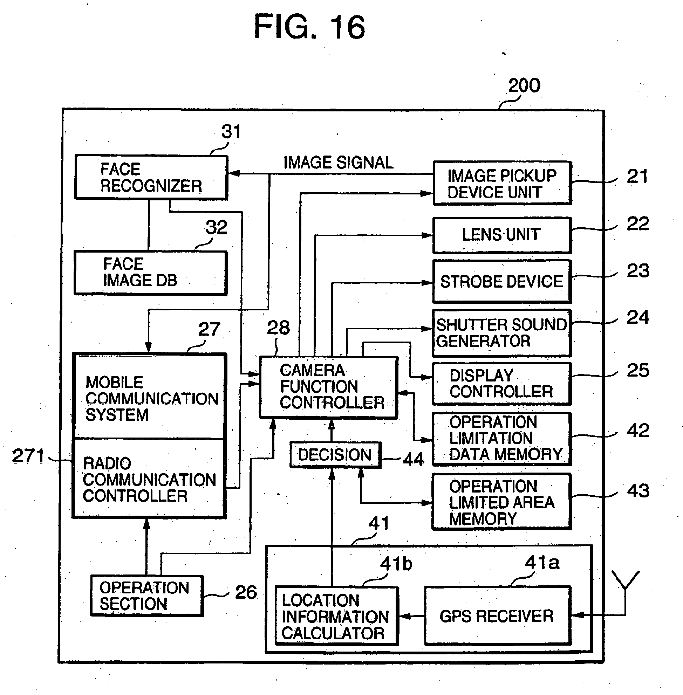

As shown in Fig. 16, the mobile communication terminal 200 according to this embodiment is further provided with a face recognizer 31 and a face image database 32. Blocks similar to those previously described with reference to Fig. 12 are denoted by the same reference numerals and descriptions of the similar blocks will be omitted.

The face image database 32 stores face image data of authorized users. The face images are captured through the camera function of the mobile communication terminal 2 and the captured face image data are registered into the face image database 32 through the face recognizer 31. When a user wishes to use a specific camera function (e.g. TV telephone function), the face of the user is captured by the camera function and the face recognizer 31 determines whether the captured face matches one of the registered faces. When a match is found, the camera function controller 28 makes the TV telephone function active even in the case of the display/TV function inhibition.

An operation limitation releasing control of this embodiment is basically similar to that shown in Fig. 9. As shown in Fig. 9, the camera function controller 28 performs operation limitation controls as described in the steps S101-S108. In the case where the limitation mode settings have been completed, the face recognizer 31 determines whether the captured face matches one of the registered faces. If no match is found, the steps S101-S108 are repeatedly performed as described before. If a match is found, the face recognizer 31 notifies the camera function controller 28 that the present user is an authorized user. The camera function controller 28, even in the case of the display/TV function inhibition, resets the display/TV (video telephone) inhibition flag DSPL to 0 to permit the authorized user to use the TV telephone function.

A mobile communication terminal 200 according to a further embodiment of the present invention also has a limitation releasing function of selectively releasing the limitations of designated operations depending on whether an emergency communication is needed or whether a captured face matches a previously registered face.

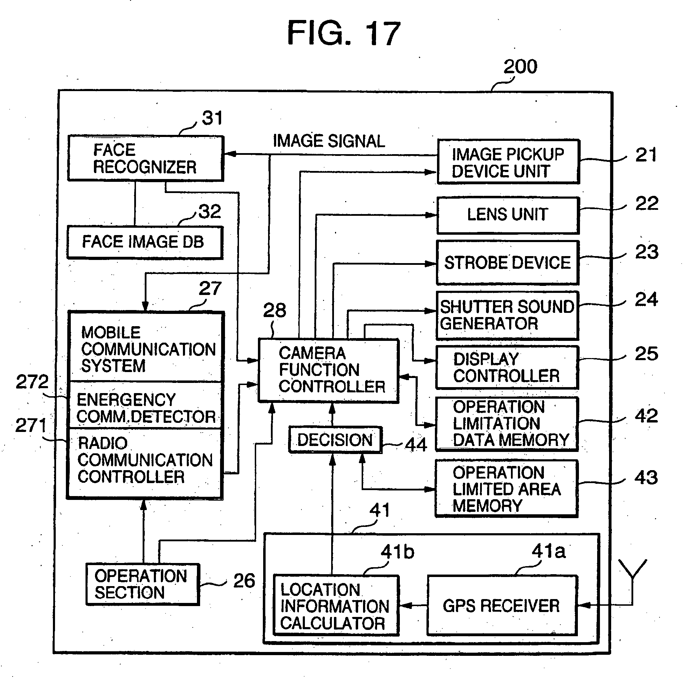

As shown in Fig. 17, the mobile communication terminal 200 according to this embodiment is further provided with an emergency communication detector 272 in the mobile communication system 27, a face recognizer 31, and a face image database 32. Blocks similar to those previously described with reference to Fig. 3 are denoted by the same reference numerals and descriptions of the similar blocks will be omitted.

As described above, even in the case of display/TV function inhibition, the TV telephone function is permitted when an emergency occurs or when the face of an authorized user is transmitted to the other party. More specifically, even when all of AZ, ST, SS and DSPL are 1s, the camera-function controller 28, when detecting an emergency or when the captured face matches one of the registered faces, resets the display/TV (video telephone) inhibition flag DSPL to 0 to permit the use of TV telephone function. Since the detailed operations of the eighth embodiment are similar to those described in the sixth and seventh embodiments, the detailed descriptions are omitted.

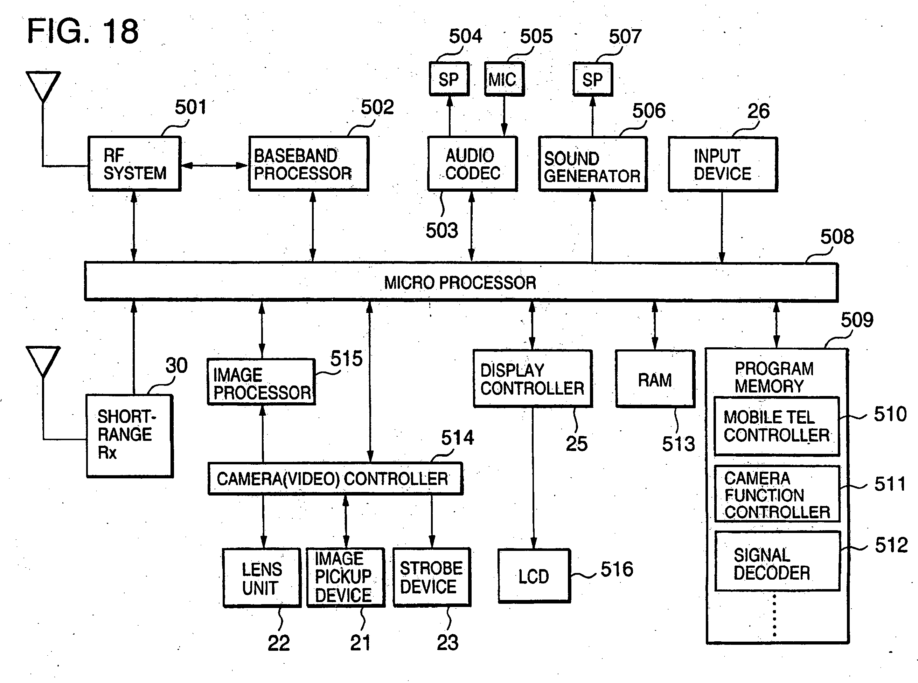

As shown in Fig. 18, the embodiments of the present invention can be applied to a mobile telephone terminal having a video-telephone function. Blocks similar to those previously described with reference to Fig. 3 are denoted by the same reference numerals and descriptions of the similar blocks will be omitted.

The mobile telephone terminal according to Fig. 9 is provided with a radio-frequency (RF) system 501, a baseband processor 502, an audio CODEC 503, a speaker (telephone receiver) , andamicrophone (telephone transmitter), which are used for telephone conversation. The mobile telephone terminal is further provided with a sound generator 506 and a speaker 507, which can be used as the shutter-sound generator 24 under the control of a microprocessor 508.

The microprocessor 508 is a program-controlled processor, which executes at least one of control programs stored in a program memory 509 using a random access memory 513. The control programs include a mobile telephone controller 510, a camera function controller 511, a signal decoder 512 and other necessary programs.

The display controller 25 controls a LCD device 516 under control of the microprocessor 508. The lens unit 22, the image pickup device 21 and the strobe device 23 are controlled by a camera controller 514 under control of the microprocessor 508. Image data captured by the image pickup device 21 is processed by an image processor 515 under control of the microprocessor 508. The captured image data is displayed on the LCD device 516 and is transmitted to the party on the other end through the RF system 501 and the baseband processor 502.

The short-range radio receiver 30 receives a camera-function limiting signal from the short-range radio station 1 and the received camera-function limiting signal is decoded to produce camera-function control flags by the signal decoder 512 running on the microprocessor 508. According to the camera-function control flags, as described before, the camera function controller 511 inhibits designated camera functions.

In addition, as described in the previous embodiments, an inhibited camera function (e.g. the video-telephone function) can be made active when an emergency occurs or when a captured face matches a registered face.

The embodiments of the present invention can be also applied to a mobile telephone terminal having a video-telephone function. In this case, the mobile telephone terminal is equipped with the GPS receiver in place of the short-range radio receiver 30 of Fig. 18. Since the operation of the GPS-equipped mobile telephone terminal is similar to that of the previous embodiments, the descriptions are omitted.

## Claims

1. A system for limiting a plurality of camera functions in a mobile communication terminal (2, 200) equipped with a camera, comprising:
at least one operation-limited area (100, 100x), wherein the mobile communication terminal is allowed to determine whether the mobile communication terminal is located within an operation-limited area;
the system being **characterized by** comprising:
a memory (12, 42, 43) storing camera-function limitation data for each of the at least one operation-limited area, the camera-function limitation data indicating selective inhibition of the plurality of camera functions;
a face image memory (32) for previously registering a face image of each authorized user; and
a camera function controller (28) for selectively inhibiting the plurality of camera functions depending on camera-function limitation data corresponding to an operation-limited area in which the mobile communication terminal is located;
wherein the camera function controller (28) is arranged to release the inhibition of the predetermined camera function in a case of inhibition of a predetermined camera function when an input image picked up by the camera matches a face image registered in the face image memory.

2. The system according to claim 1, wherein each of the at least one operation-limited area is substantially defined by radio propagation of a camera-function limiting signal broadcast by a radio station (1) installed at a predetermined location, the camera-function limiting signal including the camera-function limitation data, and
wherein the mobile communication terminal comprises a radio receiver for receiving the camera-function limiting signal from the radio station.

3. The system according to claim 2, further
comprising:
an emergency communication detector (272) for detecting occurrence of an emergency communication to inform the camera function controller of the occurrence of the emergency communication,
wherein, when informed of the occurrence of the emergency communication in a case of inhibition of a predetermined camera function, the camera function controller releases the inhibition of the predetermined camera function.

4. The system according to claim 2, further
comprising:
an emergency communication detector (272) for detecting occurrence of an emergency communication to inform the camera function controller of the occurrence of the emergency communication;
wherein, in one of the cases
(i) where the camera function controller is informed of the occurrence of the emergency communication in a case of inhibition of a predetermined camera function, and
(ii) where an input image picked up by the camera matches a face image registered in the face image memory in a case of inhibition of the predetermined camera function,
the camera function controller releases the inhibition of the predetermined camera function.

5. The system according to anyone of claims 3 and 4, wherein the predetermined camera function is a video telephone function.

6. The system according to claim 2, wherein the radio station broadcasts the camera-function limiting signal in a short-range radio communication scheme, which is different from a radio communication scheme of the mobile communication terminal.

7. The system according to claim 1, wherein each of the at least one operation-limited area is determined by the mobile communication terminal, and
wherein the mobile communication terminal comprises:
a location detector (41) for detecting a location of the mobile communication terminal;
an operation-limited area memory (43) storing operation-limited area location data; and
an area decision section (44) for searching the operation-limited area memory for a detected location of the mobile communication terminal to determine whether the mobile communication terminal is located within an operation-limited area.

8. The system according to claim 7, further comprising:
an emergency communication detector (272) for detecting occurrence of an emergency communication to inform the camera function controller of the occurrence of the emergency communication,
wherein, when informed of the occurrence of the emergency communication in a case of inhibition of a predetermined camera function, the camera function controller releases the inhibition of the predetermined camera function.

9. The system according to claim 7, further comprising:
an emergency communication detector (272) for detecting occurrence of an emergency communication to inform the camera function controller of the occurrence of the emergency communication,
wherein, in one of the cases
(i) where the camera function controller is informed of the occurrence of the emergency communication in a case of inhibition of a predetermined camera function and
(ii) where an input image picked up by the camera matches a face image registered in the face image memory in a case of inhibition of the predetermined camera function,
the camera function controller releases the inhibition of the predetermined camera function.

10. The system according to anyone of claims 8 and 9, wherein the predetermined camera function is a video telephone function.

11. The system according to claim 7, wherein the location detector is a GPS positioning section for receiving global positioning system (GPS) signals to detect the location of the mobile communication terminal.

12. The system according to claim 1, wherein the camera functions include image pickup function, autofocusing and zooming function, strobe function, shutter-sound generating function, and video telephone function.

13. A method for limiting a plurality of camera functions in a mobile communication terminal equipped with a camera, comprising:
preparing at least one operation-limited area, wherein the mobile communication terminal is allowed to determine whether the mobile communication terminal is located within an operation-limited area;
the method being **characterized by** comprising:
storing camera-function limitation data for each of the at least one operation-limited area, the camera-function limitation data indicating selective inhibition of the plurality of camera functions;
registering a face image of each authorized user on a face image memory;
selectively inhibiting the plurality of camera functions depending on the camera-function limitation data corresponding to an operation-limited area in which the mobile communication terminal is located; and
when an input image picked up by the camera matches a face image registered in the face image memory in a case of inhibition of a predetermined camera function, releasing the inhibition of the predetermined camera function.

14. The method according to claim 13, wherein each of the at least one operation-limited area is substantially defined by the mobile communication terminal receiving a camera-function limiting signal from a radio station, the camera-function limiting signal including the camera-function limitation data.

15. The method according to claim 13, wherein each of the at least one operation-limited area is determined by the mobile communication terminal, and
wherein the method further comprises:
detecting a location of the mobile communication terminal;
storing operation-limited area location data; and
searching the operation-limited area memory for a detected location of the mobile communication terminal to determine whether the mobile communication terminal is located within an operation-limited area.

16. A mobile communication terminal which is equipped with a camera and which has a plurality of camera functions, **characterized by** comprising:
a radio receiver (30) for receiving a camera-function limiting signal from a radio station installed at a predetermined location;
a signal decoder (29) for decoding the camera-function limiting signal to produce camera-function limitation data indicating selective inhibition of the plurality of camera functions;
a face image memory for previously registering a face image of each authorized user; and
a camera function controller (28) for selectively inhibiting the plurality of camera functions depending on camera-function limitation data;
wherein the camera function controller (28) is arranged to release the inhibition of the predetermined camera function in a case of inhibition of a predetermined camera function when an input image picked up by the camera matches a face image registered in the face image memory.

17. The mobile communication terminal according to claim 16, further comprising:
an emergency communication detector (272) for detecting occurrence of an emergency communication to inform the camera function controller of the occurrence of the emergency communication,
wherein, when informed of the occurrence of the emergency communication in a case of inhibition of a predetermined camera function, the camera function controller releases the inhibition of the predetermined camera function.

18. The mobile communication terminal according to claim 16, further comprising:
an emergency communication detector (272) for detecting occurrence of an emergency communication to inform the camera function controller of the occurrence oaf the emergency communication,
wherein, in one of the cases
(i) where the camera function controller is informed of the occurrence of the emergency communication in a case of inhibition of a predetermined camera function and
(ii) where an input image picked up by the camera matches a face image registered in the face image memory in a case of inhibition of the predetermined camera function,
the camera function controller releases the inhibition of the predetermined camera function.

19. The mobile communication terminal according to any of claims 17 and 18, wherein the predetermined camera function is a video telephone function.

20. The mobile communication terminal according to claim 16, wherein the radio station transmits the camera-function limiting signal in a short-range radio communication scheme, which is different from a radio communication scheme of the mobile communication terminal.

## Patentansprüche

1. System zum Beschränken mehrerer Kamerafunktionen in einem mit einer Kamera ausgestatteten Mobilkommunikationsendgerät (2, 200), umfassend:
wenigstens ein funktionsbeschränktes Gebiet (100, 100x), worin es dem Mobilkommunikationsendgerät erlaubt ist, zu ermitteln, ob das Mobilkommunikationsendgerät sich in einem funktionsbeschränkten Gebiet befindet;
wobei das System **dadurch gekennzeichnet ist, dass** es umfasst:
einen Speicher (12, 42, 43), welcher Kamerafunktionsbeschränkungsdaten für jedes des wenigstens einen funktionsbeschränkten Gebiets speichert, wobei die Kamerafunktionsbeschränkungsdaten eine selektive Sperrung der mehreren Kamerafunktionen angeben;
ein Gesichts-Abbild-Speicher (32) zum vorab Speichern eines Gesichts-Abbildes für jeden autorisierten Nutzer; und
eine Kamerafunktions-Steuereinheit (28) zum selektiven Sperren der mehreren Kamerafunktionen in Abhängigkeit von Kamerafunktionsbeschränkungsdaten entsprechend eines funktionsbeschränkten Gebietes, in dem sich das Mobilkommunikationsendgerät befindet;
wobei die Kamerafunktions-Steuereinheit (28) dazu ausgelegt ist, im Falle einer Sperrung einer vorbestimmten Kamerafunktion die Sperrung der vorbestimmten Kamerafunktion aufzuheben, wenn ein von der Kamera aufgenommenes Eingangsbild mit einem in dem Gesichts-Abbild-Speicher gespeicherten Gesichts-Abbild übereinstimmt.

2. System nach Anspruch 1, bei dem jedes des wenigstens einen funktionsbeschränkten Gebietes im Wesentlichen bestimmt ist durch Funkausbreitung eines kamerafunktionsbeschränkenden Signals, das von einer Funkstation (1) ausgesendet wird, die an einem vorbestimmten Ort installiert ist, wobei das kamerafunktionsbeschränkende Signal die Kamerafunktionsbeschränkungsdaten beinhaltet, und
wobei das Mobilkommunikationsendgerät einen Funkempfänger zum Empfangen des kamerafunktionsbeschränkenden Signals von der Funkstation umfasst.

3. System nach Anspruch 2, ferner umfassend:
einen Notfallkommunikations-Detektor (272) zum Erkennen des Eintretens einer Notfallkommunikation, um die Kamera-funktions-Steuereinheit über das Eintreten der Notfallkommunikation zu informieren,
wobei, nach Informierung über das Eintreten der Notfallkommunikation im Falle einer Sperrung einer vorbestimmten Kamerafunktion, die Kamerafunktions-Steuereinheit die Sperrung der vorbestimmten Kamerafunktion aufhebt.

4. System nach Anspruch 2, ferner umfassend:
einen Notfallkommunikations-Detektor (272) zum Erkennen des Eintretens einer Notfallkommunikation, um die Kamerafunktions-Steuereinheit über das Eintreten der Notfallkommunikation zu informieren,
wobei, in einem der Fälle
(i) wo die Kamerafunktions-Steuereinheit über das Eintreten der Notfallkommunikation im Falle einer Sperrung einer vorbestimmten Kamerafunktion informiert wird, und
(ii) wo im Falle einer Sperrung einer vorbestimmten Kamerafunktion ein von der Kamera aufgenommenes Eingangsbild mit einem in dem Gesichts-Abbild-Speicher gespeicherten Gesichts-Abbild übereinstimmt,
die Kamerafunktions-Steuereinheit die Sperrung der vorbestimmten Kamerafunktion aufhebt.

5. System nach einem der Ansprüche 3 und 4, wobei die vorbestimmte Kamerafunktion eine Videotelefonie-Funktion ist.

6. System nach Anspruch 2, wobei die Funkstation das kamerafunktionsbeschränkende Signal gemäß einem kurzreichweitigen Funkkommunikationsschema sendet, welches sich von einem Funkkommunikationsschema des Mobilkommunikationsendgeräts unterscheidet.

7. System nach Anspruch 1, wobei jedes des wenigstens einen funktionsbeschränkten Gebiets vom Mobilkommunikationsendgerät bestimmt wird, und
wobei das Mobilkommunikationsendgerät umfasst:
einen Ortsdetektor (41) zum Ermitteln des Orts des Mobilkommunikationsendgeräts;
einen Funktionsbeschränktgebiet-Speicher (43), der Ortsdaten für funktionsbeschränkte Gebiete speichert; und
eine Gebiets-Entscheidungs-Einheit (44) zum Durchsuchen des Funktionsbeschränktgebiet-Speichers nach einem ermittelten Ort des Mobilkommunikationsendgeräts, um zu bestimmen, ob das Mobilkommunikationsendgerät sich in einem funktionsbeschränkten Gebiet befindet.

8. System nach Anspruch 7, ferner umfassend:
einen Notfallkommunikations-Detektor (272) zum Erkennen des Eintretens einer Notfallkommunikation, um die Kamerafunktions-Steuereinheit über das Eintreten der Notfallkommunikation zu informieren,
wobei, nach Informierung über das Eintreten der Notfallkommunikation im Falle einer Sperrung einer vorbestimmten Kamerafunktion, die Kamerafunktions-Steuereinheit die Sperrung der vorbestimmten Kamerafunktion aufhebt.

9. System nach Anspruch 7, ferner umfassend:
einen Notfallkommunikations-Detektor (272) zum Erkennen des Eintretens einer Notfallkommunikation, um die Kamerafunktions-Steuereinheit über das Eintreten der Notfallkommunikation zu informieren,
wobei, in einem der Fälle
(i) wo die Kamerafunktions-Steuereinheit über das Eintreten der Notfallkommunikation im Falle einer Sperrung einer vorbestimmten Kamerafunktion informiert wird, und
(ii) wo im Falle einer Sperrung einer vorbestimmten Kamerafunktion ein von der Kamera aufgenommenes Eingangsbild mit einem in dem Gesichts-Abbild-Speicher gespeicherten Gesichts-Abbild übereinstimmt,
die Kamerafunktions-Steuereinheit die Sperrung der vorbestimmten Kamerafunktion aufhebt.

10. System nach einem der Ansprüche 8 und 9, wobei die vorbestimmte Kamerafunktion eine Videotelefonie-Funktion ist.

11. System nach Anspruch 7, wobei der Ortsdetektor eine GPS-Positionierungs-Einheit ist, zum Empfangen von Signalen eines globalen Positionsbestimmungssystems (GPS), um den Ort des Mobilkommunikationsendgeräts zu ermitteln.

12. System nach Anspruch 1, wobei die Kamerafunktionen eine Bild-Aufnahme-Funktion, eine Auto-Fokus und Zoom-Funktion, eine Blitz-Funktion, eine Verschlussgeräusch-Erzeugungsfunktion, und eine Videotelefonie-Funktion umfassen.

13. Verfahren zum Beschränken mehrerer Kamerafunktionen in einem mit einer Kamera ausgestatteten Mobilkommunikationsendgerät, umfassend:
Vorbereiten wenigstens eines funktionsbeschränkten Gebiets, worin es dem Mobilkommunikationsendgerät erlaubt ist, zu ermitteln, ob das Mobilkommunikationsendgerät sich in einem funktionsbeschränkten Gebiet befindet;
wobei das Verfahren **dadurch gekennzeichnet ist, dass** es umfasst:
Speichern von Kamerafunktionsbeschränkungsdaten für jedes des wenigstens einen funktionsbeschränkten Gebiets, wobei die Kamerafunktionsbeschränkungsdaten eine selektive Sperrung der mehreren Kamerafunktionen angeben;
Speichern eines Gesichts-Abbildes für jeden autorisierten Nutzer in einem Gesichts-Abbild-Speicher;
selektives Sperren der mehreren Kamerafunktionen in Abhängigkeit von Kamerafunktionsbeschränkungsdaten entsprechend eines funktionsbeschränkten Gebietes, in dem sich das Mobilkommunikationsendgerät befindet; und
im Falle einer Sperrung einer vorbestimmten Kamerafunktion, Aufheben der Sperrung der vorbestimmten Kamerafunktion, wenn ein von der Kamera aufgenommenes Eingangsbild mit einem in dem Gesichts-Abbild-Speicher gespeicherten Gesichts-Abbild übereinstimmt.

14. Verfahren nach Anspruch 13, bei dem jedes des wenigstens einen funktionsbeschränkten Gebietes im Wesentlichen dadurch bestimmt ist, dass das Mobilkommunikationsendgerät ein kamerafunktionsbeschränkendes Signal von einer Funkstation empfängt, wobei das kamerafunktionsbeschränkende Signal die Kamerafunktionsbeschränkungsdaten beinhaltet.

15. Verfahren nach Anspruch 13, bei dem jedes des wenigstens einen funktionsbeschränkten Gebiets vom Mobilkommunikationsendgerät bestimmt wird, und
wobei das Verfahren ferner umfasst:
Ermitteln des Ortes des Mobilkommunikationsendgeräts;
Speichern von Ortsdaten für funktionsbeschränkte Gebiete; und
Durchsuchen des Funktionsbeschränktgebiet-Speichers nach einem ermittelten Ort des Mobilkommunikationsendgeräts, um zu bestimmen, ob das Mobilkommunikationsendgerät sich in einem funktionsbeschränkten Gebiet befindet.

16. Mobilkommunikationsendgerät, das mit einer Kamera ausgestattet ist und das mehrerer Kamerafunktionen aufweist, **dadurch gekennzeichnet, dass** es umfasst:
einen Funkempfänger (30) zum Empfangen eines kamerafunktionsbeschränkenden Signals von einer Funkstation, die an einem vorbestimmten Ort installiert ist;
einen Signaldekoder (29) zum Dekodieren des kamerafunktionsbeschränkenden Signals, um Kamerafunktionsbeschränkungsdaten zu erzeugen, welche eine selektive Sperrung der mehreren Kamerafunktionen angeben;
einen Gesichts-Abbild-Speicher zum vorab Speichern eines Gesichts-Abbildes für jeden autorisierten Nutzer; und
eine Kamerafunktions-Steuereinheit (28) zum selektiven Sperren der mehreren Kamerafunktionen in Abhängigkeit von Kamerafunktionsbeschränkungsdaten;
wobei die Kamerafunktions-Steuereinheit (28) dazu ausgelegt ist, im Falle einer Sperrung einer vorbestimmten Kamerfunktion die Sperrung der vorbestimmten Kamerafunktion aufzuheben, wenn ein von der Kamera aufgenommenes Eingangsbild mit einem in dem Gesichts-Abbild-Speicher gespeicherten Gesichts-Abbild übereinstimmt.

17. Mobilkommunikationsendgerät nach Anspruch 16, ferner umfassend:
einen Notfallkommunikations-Detektor (272) zum Erkennen des Eintretens einer Notfallkommunikation, um die Kamerafunktions-Steuereinheit über das Eintreten der Notfallkommunikation zu informieren,
wobei, nach Informierung über das Eintreten der Notfallkommunikation im Falle einer Sperrung einer vorbestimmten Kamerafunktion, die Kamerafunktions-Steuereinheit die Sperrung der vorbestimmten Kamerafunktion aufhebt.

18. Mobilkommunikationsendgerät nach Anspruch 16, ferner umfassend:
einen Notfallkommunikations-Detektor (272) zum Erkennen des Eintretens einer Notfallkommunikation, um die Kamerafunktions-Steuereinheit über das Eintreten der Notfallkommunikation zu informieren,
wobei, in einem der Fälle
(i) wo die Kamerafunktions-Steuereinheit über das Eintreten der Notfallkommunikation im Falle einer Sperrung einer vorbestimmten Kamerafunktion informiert wird, und
(ii) wo im Falle einer Sperrung einer vorbestimmten Kamerafunktion ein von der Kamera aufgenommenes Eingangsbild mit einem in dem Gesichts-Abbild-Speicher gespeicherten Gesichts-Abbild übereinstimmt,
die Kamerafunktions-Steuereinheit die Sperrung der vorbestimmten Kamerafunktion aufhebt.

19. Mobilkommunikationsendgerät nach einem der Ansprüche 17 und 18, wobei die vorbestimmte Kamerafunktion eine Videotelefonie-Funktion ist.

20. Mobilkommunikationsendgerät nach Anspruch 16, bei dem die Funkstation das kamerafunktionsbeschränkende Signal gemäß einem kurzreichweitigen Funkkommunikationsschema sendet, welches sich von einem Funkkommunikationsschema des Mobilkommunikationsendgeräts unterscheidet.

## Revendications

1. Système destiné à limiter une pluralité de fonctions de caméra dans un terminal de communication mobile (2, 200) équipé d'une caméra, comprenant :
au moins une zone à fonctionnement limité (100, 100x), dans lequel le terminal de communication mobile est autorisé à déterminer si le terminal de communication mobile est localisé au sein d'une zone à fonctionnement limité ;
le système étant **caractérisé en ce qu'**il comprend :
une mémoire (12, 42, 43) stockant des données de limitation de fonctions de caméra pour chacune de l'au moins une zone à fonctionnement limité, les données de limitation de fonctions de caméra indiquant une inhibition sélective de la pluralité de fonctions de caméra ;
une mémoire d'images de visages (32) destinée à enregistrer au préalable une image du visage de chaque utilisateur autorisé ; et
un contrôleur de fonctions de caméra (28) destiné à inhiber sélectivement la pluralité de fonctions de caméra en fonction de données de limitation de fonctions de caméra correspondant à une zone à fonctionnement limité dans laquelle est localisé le terminal de communication mobile ;
dans lequel le contrôleur de fonctions de caméra (28) est agencé de manière à libérer l'inhibition de la fonction de caméra prédéterminée en cas d'inhibition d'une fonction de caméra prédéterminée lorsqu'une image d'entrée capturée par la caméra correspond à une image de visage enregistrée dans la mémoire d'images de visages.

2. Système selon la revendication 1, dans lequel chacune de l'au moins une zone à fonctionnement limité est sensiblement définie par la propagation radio d'un signal de limitation de fonctions de caméra diffusé par une station radio (1) installée au niveau d'un emplacement prédéterminé, le signal de limitation de fonctions de caméra incluant les données de limitation de fonctions de caméra ; et
dans lequel le terminal de communication mobile comprend un récepteur radio destiné à recevoir le signal de limitation de fonctions de caméra en provenance de la station radio.

3. Système selon la revendication 2, comprenant en outre :
un détecteur de communication d'urgence (272) destiné à détecter l'occurrence d'une communication d'urgence en vue d'informer le contrôleur de fonctions de caméra de l'occurrence de la communication d'urgence ;
dans lequel, lorsqu'il a été informé de l'occurrence de la communication d'urgence en cas d'inhibition d'une fonction de caméra prédéterminée, le contrôleur de fonctions de caméra libère l'inhibition de la fonction de caméra prédéterminée.

4. Système selon la revendication 2, comprenant en outre :
un détecteur de communication d'urgence (272) destiné à détecter l'occurrence d'une communication d'urgence en vue d'informer le contrôleur de fonctions de caméra de l'occurrence de la communication d'urgence ;
dans lequel, dans l'un des cas
(i) où le contrôleur de fonctions de caméra est informé de l'occurrence de la communication d'urgence en cas d'inhibition d'une fonction de caméra prédéterminée, et
(ii) où une image d'entrée capturée par la caméra correspond à une image de visage enregistrée dans la mémoire d'images de visages en cas d'inhibition de la fonction de caméra prédéterminée,
le contrôleur de fonctions de caméra libère l'inhibition de la fonction de caméra prédéterminée.

5. Système selon l'une quelconque des revendications 3 et 4, dans lequel la fonction de caméra prédéterminée est une fonction de téléphone vidéo.

6. Système selon la revendication 2, dans lequel la station radio diffuse le signal de limitation de fonctions de caméra dans un schéma de communication radio à courte portée, lequel est différent d'un schéma de communication radio du terminal de communication mobile.

7. Système selon la revendication 1, dans lequel chacune de l'au moins une zone à fonctionnement limité est déterminée par le terminal de communication mobile, et
dans lequel le terminal de communication mobile comprend :
un détecteur d'emplacement (41) destiné à détecter un emplacement du terminal de communication mobile ;
une mémoire de zones à fonctionnement limité (43) stockant des données de localisation de zones à fonctionnement limité ; et
une section de détermination de zone (44) destinée à rechercher, dans la mémoire de zones à fonctionnement limité, un emplacement détecté du terminal de communication mobile, en vue de déterminer si le terminal de communication mobile est situé dans une zone à fonctionnement limité.

8. Système selon la revendication 7, comprenant en outre :
un détecteur de communication d'urgence (272) destiné à détecter l'occurrence d'une communication d'urgence en vue d'informer le contrôleur de fonctions de caméra de l'occurrence de la communication d'urgence ;
dans lequel, lorsqu'il a été informé de l'occurrence de la communication d'urgence en cas d'inhibition d'une fonction de caméra prédéterminée, le contrôleur de fonctions de caméra libère l'inhibition de la fonction de caméra prédéterminée.

9. Système selon la revendication 7, comprenant en outre :
un détecteur de communication d'urgence (272) destiné à détecter l'occurrence d'une communication d'urgence en vue d'informer le contrôleur de fonctions de caméra de l'occurrence de la communication d'urgence ;
dans lequel, dans l'un des cas
(i) où le contrôleur de fonctions de caméra est informé de l'occurrence de la communication d'urgence en cas d'inhibition d'une fonction de caméra prédéterminée, et
(ii) où une image d'entrée capturée par la caméra correspond à une image de visage enregistrée dans la mémoire d'images de visages en cas d'inhibition de la fonction de caméra prédéterminée,
le contrôleur de fonctions de caméra libère l'inhibition de la fonction de caméra prédéterminée.

10. Système selon l'une quelconque des revendications 8 et 9, dans lequel la fonction de caméra prédéterminée est une fonction de téléphone vidéo.

11. Système selon la revendication 7, dans lequel le détecteur d'emplacement est une section de positionnement GPS pour recevoir des signaux de système de positionnement mondial (GPS) en vue de détecter l'emplacement du terminal de communication mobile.

12. Système selon la revendication 1, dans lequel les fonctions de caméra incluent une fonction de capture d'images, une fonction de mise au point automatique et de zoom, une fonction stroboscopique, une fonction de génération de son d'obturateur et une fonction de téléphone vidéo.

13. Procédé destiné à limiter une pluralité de fonctions de caméra dans un terminal de communication mobile équipé d'une caméra, comportant:
préparer au moins une zone à fonctionnement limité, dans lequel le terminal de communication mobile est autorisé à déterminer si le terminal de communication mobile est localisé au sein d'une zone à fonctionnement limité ;
le procédé étant **caractérisé en ce qu'**il comporte:
stocker des données de limitation de fonctions de caméra pour chacune de l'au moins une zone à fonctionnement limité, les données de limitation de fonctions de caméra indiquant une inhibition sélective de la pluralité de fonctions de caméra ;
enregistrer une image du visage de chaque utilisateur autorisé dans une mémoire d'images de visages ;
inhiber sélectivement la pluralité de fonctions de caméra en fonction des données de limitation de fonctions de caméra correspondant à une zone à fonctionnement limité dans laquelle est localisé le terminal de communication mobile ; et
lorsqu'une image d'entrée capturée par la caméra correspond à une image de visage enregistrée dans la mémoire d'images de visages en cas d'inhibition d'une fonction de caméra prédéterminée, libérer l'inhibition de la fonction de caméra prédéterminée.

14. Procédé selon la revendication 13, dans lequel chacune de l'au moins une zone à fonctionnement limité est sensiblement définie par la réception, par le terminal de communication mobile, d'un signal de limitation de fonctions de caméra en provenance d'une station radio, le signal de limitation de fonctions de caméra incluant les données de limitation de fonctions de caméra.

15. Procédé selon la revendication 13, dans lequel chacune de l'au moins une zone à fonctionnement limité est déterminée, par le terminal de communication mobile, et dans lequel le procédé comporte en outre :
détecter un emplacement du terminal de communication mobile ;
stocker des données de localisation de zones à fonctionnement limité ; et
rechercher, dans la mémoire de zones à fonctionnement limité, un emplacement détecté du terminal de communication mobile, en vue de déterminer si le terminal de communication mobile est localisé au sein d'une zone à fonctionnement limité.

16. Terminal de communication mobile équipé d'une caméra et présentant une pluralité de fonctions de caméra, **caractérisé en ce qu'**il comprend :
un récepteur radio (30) destiné à recevoir un signal de limitation de fonctions de caméra en provenance d'une station radio installée au niveau d'un emplacement prédéterminé ;
un décodeur de signaux (29) destiné à décoder le signal de limitation de fonctions de caméra en vue de produire des données de limitation de fonctions de caméra indiquant une inhibition sélective de la pluralité de fonctions de caméra ;
une mémoire d'images de visages destinée à enregistrer au préalable une image du visage de chaque utilisateur autorisé ; et
un contrôleur de fonctions de caméra (28) destiné à inhiber sélectivement la pluralité de fonctions de caméra en fonction de données de limitation de fonctions de caméra ;
dans lequel le contrôleur de fonctions de caméra (28) est agencé de manière à libérer l'inhibition de la fonction de caméra prédéterminée en cas d'inhibition d'une fonction de caméra prédéterminée lorsqu'une image d'entrée capturée par la caméra correspond à une image de visage enregistrée dans la mémoire d'images de visages.

17. Terminal de communication mobile selon la revendication 16, comprenant en outre :
un détecteur de communication d'urgence (272) destiné à détecter l'occurrence d'une communication d'urgence en vue d'informer le contrôleur de fonctions de caméra de l'occurrence de la communication d'urgence ;
dans lequel, lorsqu'il a été informé de l'occurrence de la communication d'urgence en cas d'inhibition d'une fonction de caméra prédéterminée, le contrôleur de fonctions de caméra libère l'inhibition de la fonction de caméra prédéterminée.

18. Terminal de communication mobile selon la revendication 16, comprenant en outre :
un détecteur de communication d'urgence (272) destiné à détecter l'occurrence d'une communication d'urgence en vue d'informer le contrôleur de fonctions de caméra de l'occurrence de la communication d'urgence,
dans lequel, dans l'un des cas
(i) où le contrôleur de fonctions de caméra est informé de l'occurrence de la communication d'urgence en cas d'inhibition d'une fonction de caméra prédéterminée, et
(ii) où une image d'entrée capturée par la caméra correspond à une image de visage enregistrée dans la mémoire d'images de visages en cas d'inhibition de la fonction de caméra prédéterminée,
le contrôleur de fonctions de caméra libère l'inhibition de la fonction de caméra prédéterminée.

19. Terminal de communication mobile selon l'une quelconque des revendications 17 et 18, dans lequel la fonction de caméra prédéterminée est une fonction de téléphone vidéo.

20. Terminal de communication mobile selon la revendication 16, dans lequel la station radio transmet le signal de limitation de fonctions de caméra dans un schéma de communication radio à courte portée, lequel est différent d'un schéma de communication radio du terminal de communication mobile.
